# EUROPÄISCHE PATENTANMELDUNG

(11) **EP 4 645 660 A1**
(43) Veröffentlichungstag der Anmeldung: **05.11.2025**
(21) Anmeldenummer: 24173861.6
(22) Anmeldetag: 02.05.2024
(51) Int. Cl.: H02M 1/00, H02M 1/42, H02M 7/06, H02M 7/48

(54) **VORRICHTUNG UND VERFAHREN ZUR SICHEREN UND EFFIZIENTEN LEISTUNGSVERSORGUNG**

(71) Anmelder: Swiss Space Mining AG, 9500 Wil (CH)
(72) Erfinder: BASTRON, Ewald, 6052 Hergiswil (CH); LIAKH, Siarhei, 220051 Minsk (BY); BREU, Stefan Urs, 9554 Tägerschen (CH); KLINGLER, Philipp Pascal, 8200 Schaffhausen (CH)
(74) Vertreter: EGLI-EUROPEAN PATENT ATTORNEYS

(57) **Zusammenfassung**

Eine sichere und effiziente Leistungsversorgungsvorrichtung (1) weist einen Eingang (10) für eine Netz-Wechselspannung mit einer Eingangsfrequenz auf einer Primärseite der Leistungsversorgungsvorrichtung (1); einen Gleichrichter (3) zum Gleichrichten der Netz-Wechselspannung, die in den Eingang (10) eingespeist wird; einen Gleichstrom-zu-Wechselstrom Wandler (5), der die gleichgerichtete Wechselspannung in eine Wandler-Wechselspannung mit einer Wandlerfrequenz wandelt; einen Ausgangstransformator (6, T1) mit zumindest zwei Ausgängen, der die primärseitige Wandler-Wechselspannung des Gleichstrom-zu-Wechselstrom Wandlers (5) galvanisch getrennt in eine sekundärseitige Ausgangsspannung mit der Wandlerfrequenz wandelt; und einen dem Ausgangstransformator (6, T1) nachgeschalteter und zumindest zweipoliger Ausgang (11) auf der Sekundärseite der Leistungsversorgungsvorrichtung (1) zur Versorgung zumindest einer Last (20) auf, wobei die Wandlerfrequenz grösser als die Eingangsfrequenz ist.

## Beschreibung

Die vorliegende Erfindung betrifft eine Vorrichtung und ein Verfahren zur sicheren und effizienten Leistungsversorgung bzw. Stromversorgung, sowie eine dementsprechende Verwendung.

### Stand der Technik

Lasten oder Verbraucher, beispielsweise Heizelementen und Heizspiralen, Glühlampen, die mit Netz-Wechselspannung versorgt werden, erfordern eine Versorgung der benötigten Leistung mittels einer Wechselspannungsleitung. Im Falle eines Kurzschlusses oder des Kontakts eines Menschen mit einem stromleitenden Teil dieser Leitung oder des Verbrauchers besteht Verletzungs- oder gar Lebensgefahr, da die Netz-Wechselspannung oberhalb der Schutzkleinspannung beziehungsweise Sicherheitskleinspannung liegt.

Aus diesem Grund müssen sowohl für die Versorgungsleitungen als auch für die mit Netzspannung betriebenen Geräte Schutzmaßnahmen gegen den elektrischen Schlag bei Berührung spannungsführender Leitungen oder Verbraucher getroffen werden. Auch können Leitungen oder Verbraucher beschädigt sein oder nicht sachgerecht eingesetzt werden. Beispielsweise können offene Leiter mit Wasser in Berührung kommen, womit der Gefahrenbereich vergrößert wird. Deshalb wird ein recht erheblicher Aufwand betrieben, um diese Gefahren zu mindern. Beispielsweise werden (Glüh-) Lampen in Außenbereichen wetterfest vorgesehen oder es werden Steckdosen in Kinderzimmern mit Kindersicherungen versehen. Auch gibt es strikte Vorschriften zur Isolation von Leitern und Kontakten bzw. Steckern und es sind Fehlerstromschutzschalter vorgeschrieben.

Zudem entsteht bei einer üblichen Zuleitung von Leistung zu einer realen Last nachteilhaft Verlustleistung. Induktive und kapazitive Lasten führen in Wechselstromkreisen üblicherweise zu unerwünschter Blindleistung.

Nachteilig im Stand der Technik ist folglich, dass bei üblichen Wechselspannungsversorgungen trotz aller Sicherungsmassnahmen ein Risiko für den Menschen besteht und auch der Wirkungsgrad verbesserungswürdig ist.

Auch ist es oftmals gewünscht, eine Leistungs- bzw. Stromversorgung in einem Bereich mit erhöhter Gefahr vorzusehen, beispielsweise in Baustellen oder Minen, in feuchten Kellern oder in Bunkern, womit die Sicherheit einer Stromversorgung nochmals verbessert werden soll.

### Kurzfassung der Erfindung

Es ist eine Aufgabe der vorliegenden Erfindung, eine Leistungsversorgungsvorrichtung bereitzustellen, die sicher und effizient ist.

Diese Aufgabe wird gelöst durch die Merkmale der Leistungsversorgungsvorrichtung des Anspruchs 1, sowie durch das Verfahren des Anspruchs 9 und die Verwendungen der Ansprüche 14 und 15 Weiterbildungen sind in den jeweiligen abhängigen Ansprüchen gegeben. Dabei können das Verfahren und die Verwendung der Leistungsversorgungsvorrichtung auch durch die unten stehenden oder in den Unteransprüchen angegebenen Merkmale der Leistungsversorgungsvorrichtung des Anspruchs 1 weitergebildet sein, und umgekehrt.

Gemäss einem Aspekt ist eine Leistungsversorgungsvorrichtung vorgesehen, die folgendes aufweist: einen Eingang für eine Netz-Wechselspannung mit einer Eingangsfrequenz auf einer Primärseite der Leistungsversorgungsvorrichtung; einen Gleichrichter zum Gleichrichten der Netz-Wechselspannung, die in den Eingang eingespeist wird; einen Gleichstrom-zu-Wechselstrom Wandler, der die gleichgerichtete Wechselspannung in eine Wandler-Wechselspannung mit einer Wandlerfrequenz wandelt; einen Ausgangstransformator mit zumindest zwei Ausgängen, der die primärseitige Wandler-Wechselspannung des Gleichstrom-zu-Wechselstrom Wandlers galvanisch getrennt in eine sekundärseitige Ausgangsspannung mit der Wandlerfrequenz wandelt; einen dem Ausgangstransformator nachgeschalteter und zumindest zweipoliger Ausgang auf der Sekundärseite der Leistungsversorgungsvorrichtung zur Versorgung zumindest einer Last; wobei die Wandlerfrequenz grösser als die Eingangsfrequenz ist.

Gemäss einer Weiterbildung des vorstehenden Aspekts ist eine Leistungsversorgungsvorrichtung vorgesehen, wobei die Leistungsversorgungsvorrichtung (1) derart eingerichtet ist, dass die (Wandler-) Frequenz der Ausgangsspannung im Bereich von 100-500 kHz, vorzugsweise im Bereich von 300-500 kHz, und noch mehr bevorzugt im Bereich von 450-450 kHz liegt. In diesen Bereichen kann die Ausgangsspannung als "hochfrequente" Ausgangsspannung bezeichnet werden, da sich diese deutlich von der üblichen Netzfrequenz unterscheidet.

Gemäss einer Weiterbildung der vorstehenden Aspekte ist eine Leistungsversorgungsvorrichtung vorgesehen, welche weiter folgendes aufweist: eine mit einem ersten Ausgang des Ausgangstransformators in Serie geschaltete Induktivität; wobei die Induktivität mit einem ersten Pol des Ausgangs verbunden ist;
eine mit einem zweiten Ausgang des Ausgangstransformators in Serie geschaltete Kapazität; wobei die Kapazität mit einem zweiten Pol des Ausgangs verbunden ist.

Gemäss einer Weiterbildung der vorstehenden Aspekte ist eine Leistungsversorgungsvorrichtung vorgesehen, wobei die Leistungsversorgungsvorrichtung derart eingerichtet ist, dass ein Schwingkreis, der die Kapazität, die Induktivität, eine Sekundärwicklung des Transformators und die Last aufweist, derart betrieben wird, dass die Blindleistung gegenüber dem Betrieb der Last mit der Netz-Wechselspannung durch Frequenzanpassung verringert wird.

Gemäss einer Weiterbildung der vorstehenden Aspekte ist eine Leistungsversorgungsvorrichtung vorgesehen, wobei diese weiter folgendes aufweist: eine Sekundärsteuereinheit, welche auf der Sekundärseite angeordnet ist und welche die Spannung und/oder den Strom am Ausgang der Vorrichtung erfassen kann und/oder verarbeiten kann; einen Optokoppler, der die erfassten und/oder verarbeiteten Parameter an eine primärseitige Primärsteuereinheit weiterleitet, welche ein in eine Primärwicklung des Ausgangstransformators eingespeistes Leistungssignal steuert.

Gemäss einer Weiterbildung der vorstehenden Aspekte ist eine Leistungsversorgungsvorrichtung vorgesehen, wobei die Wandler-Wechselspannung mit deren Wandlerfrequenz durch einen Strommodus-PWM-Controller geregelt wird.

Gemäss einer Weiterbildung der vorstehenden Aspekte ist eine Leistungsversorgungsvorrichtung vorgesehen, wobei die Leistungsversorgungsvorrichtung eingerichtet ist, die Wandlerfrequenz derart zu steuern, dass der Blindwiderstand der Kapazität eines lastseitigen Schwingkreises zumindest annähernd gleich dem Blindwiderstand der Induktivität desselben ist.

Gemäss einer Weiterbildung der vorstehenden Aspekte ist eine Leistungsversorgungsvorrichtung vorgesehen, wobei die Leistungsversorgungsvorrichtung weiter das folgende aufweist: eine Leistungskorrektureinheit zwischen Gleichrichter und Gleichstrom-zu-Wechselstrom Wandler.

Gemäss einem weiteren Aspekt ist Verfahren zur Verbesserung der Sicherheit einer Leistungsversorgung einer Last mittels einer Leistungsversorgungsvorrichtung offenbart, das Verfahren aufweisend die folgenden Schritte:
Gleichrichten einer Netz-Wechselspannung, die eine Eingangsfrequenz aufweist; Wandeln der gleichgerichteten Wechselspannung in eine Wandler-Wechselspannung mit einer Wandlerfrequenz mittels eines Gleichstrom-zu-Wechselstrom Wandlers; Wandeln der Wandler-Wechselspannung unter galvanischer Trennung in eine Ausgangsspannung mit der Wandlerfrequenz.

Gemäss einer Weiterbildung der vorstehenden Aspekte ist Verfahren zum Betreiben einer Leistungsversorgungsvorrichtung vorgesehen, wobei die Wandlerfrequenz grösser als die Eingangsfrequenz ist.

Gemäss einer Weiterbildung der vorstehenden Aspekte ist Verfahren zum Betreiben einer Leistungsversorgungsvorrichtung vorgesehen, wobei die Wandlerfrequenz der Ausgangsspannung im Bereich von 100-500 kHz, vorzugsweise im Bereich von 300-500 kHz, und noch mehr bevorzugt im Bereich von 450-450 kHz liegt.

Gemäss einer Weiterbildung der vorstehenden Aspekte ist Verfahren zum Betreiben einer Leistungsversorgungsvorrichtung vorgesehen, wobei die die Wandlerfrequenz derart gesteuert wird, dass der Blindwiderstand der Kapazität eines lastseitigen Schwingkreises zumindest annähernd gleich dem Blindwiderstand der Induktivität desselben ist.

Gemäss einer Weiterbildung der vorstehenden Aspekte ist Verfahren zum Betreiben einer Leistungsversorgungsvorrichtung vorgesehen, wobei die Leistungsversorgungsvorrichtung das folgende aufweist: eine mit einem ersten Ausgang eines Ausgangstransformators in Serie geschaltete Induktivität; wobei die Induktivität mit einem ersten Pol des Ausgangs verbunden ist; eine mit einem zweiten Ausgang des Ausgangstransformators in Serie geschaltete Kapazität; wobei die Kapazität mit einem zweiten Pol des Ausgangs verbunden ist; das Verfahren weiter aufweisend die folgenden Schritte: Betreiben eines Schwingkreises der Leistungsversorgungsvorrichtung, der zumindest die Kapazität, die Induktivität, eine Sekundärwicklung des Transformators und die Last aufweist, derart, dass die Blindleistung gegenüber dem Betrieb der Last mit der Netz-Wechselspannung durch Frequenzanpassung verringert wird.

Gemäss einem weiteren Aspekt ist eine Verwendung der Leistungsversorgungsvorrichtung zum Schutz vor Stromschlägen bei ausgangsseitig angeschlossenen Lasten und Leitungen offenbart.

Gemäss einem weiteren Aspekt ist eine Verwendung der Leistungsversorgungsvorrichtung zur Neutralisierung reaktiver Widerstände ausgangsseitig angeschlossener Lasten und/oder Leitungen durch Frequenzanpassung offenbart.

In die vorstehenden Aspekte fließen die folgenden Überlegungen betreffend der Effizienzverbesserung der Leistungsversorgungsvorrichtung ein:
Beispielsweise sind die Verbraucher elektrischer Energie Elektromotoren, so dass die Blindleistung einen induktiven Charakter hat. Man zahlt jedoch nicht nur für die verbrauchte Wirkleistung, sondern auch für die Blindleistung. Um die Stromkosten und die Netzbelastung zu senken, ist es daher gewünscht, die Blindleistung zu kompensieren, d. h. den Leistungsfaktor zu erhöhen. Eine solche Blindleistungskompensation besteht oftmals in dem lastseitigen Vorsehen von zusätzlichen Induktivitäten oder Kapazitäten zur Anpassung an Frequenz und Charakteristik der Last.

Vorliegend werden Blindströme anders gehandhabt, da die Frequenz der Ausgangsspannung entsprechend zur Kompensation verändert bzw. eingestellt wird.

In einem Schwingkreis gibt es immer eine Kapazität und eine Induktivität, also wird es eine Frequenz geben, bei der der Blindwiderstand der Kapazität gleich dem Blindwiderstand der Induktivität ist. Dies wird ist insbesondere bei oder in Resonanz der Fall.

Bekanntlich wird das Phänomen eines steilen Anstiegs der Amplitude erzwungener Schwingungen, das auftritt, wenn die Frequenz des äußeren Einflusses mit einigen durch die Eigenschaften des Systems bestimmten Werten übereinstimmt, als Resonanz bezeichnet. Die Bedingung für Resonanz in elektronischen Geräten ist laut Literatur die Gleichheit der Reaktanzen der Induktionsspule und der Kapazität bei einer bestimmten Frequenz, wodurch Energie zwischen dem Magnetfeld des induktiven Elements und dem elektrischen Feld des Kondensators übertragen werden kann.

Die Reaktanzen von Induktivität und Kapazität hängen wiederum von der Frequenz des Wechselstroms ab. Mit zunehmender Frequenz steigt der induktive Blindwiderstand und sinkt der kapazitive Blindwiderstand. Wenn die Frequenz sinkt, nehmen umgekehrt der induktive Blindwiderstand ab und der kapazitive Blindwiderstand zu.

Für jeden Stromkreis gibt es also eine bestimmte Resonanzfrequenz, bei der der induktive und der kapazitive Widerstand gleich sind. Im Moment der Resonanz steigt die Amplitude der Wechselspannung in der Parallelschaltung stark an oder die Amplitude des Stroms in der Reihenschaltung nimmt stark zu.

In die vorstehenden Aspekte fließen die folgenden Überlegungen betreffend des Sicherheitsaspekts ein:
Die in der Energiewirtschaft verwendete Netzfrequenz (beispielsweise ca. 50 Hz oder 60Hz) stellt ein erhebliches Risiko für Krampfanfälle und Herzkammerflimmern dar. Flimmern ist keine muskuläre Reaktion, sondern wird durch wiederholte Stimulation mit maximaler Empfindlichkeit bei 10 Hz verursacht. Daher gilt Wechselstrom (mit 50 Hz) als deutlich gefährlicher als Gleichstrom - er beeinflusst die menschliche Herztätigkeit.

Dies ergibt sich auch aus einem Vergleich der als kritisch ermittelten Schwellenwerte für nicht auslösende Ströme (50 - 80 mA bei Gleichstrom und 10 - 15 mA bei 50-Hz-Wechselstrom) und der maximalen Stehspannungen. Eine Person, die zylindrische Elektroden in den Händen hält, kann (je nach Schmerzempfindung) einer Spannung von höchstens 21-22 V bei 50 Hz und höchstens 100-105 V bei Gleichstrom widerstehen.

Gleichstrom verursacht im Vergleich zu Wechselstrom desselben Wertes, der durch den menschlichen Körper fließt, schwächere Muskelkontraktionen und weniger unangenehme Empfindungen. In der Regel handelt es sich dabei um ein Gefühl der Hauterwärmung bei niedrigen Strömen oder der inneren Erwärmung bei hohen Strömen. Nur im Moment des Schließens und Öffnens des Stromkreises verspürt der Mensch eine kurzzeitige schmerzhafte Empfindung aufgrund einer plötzlichen krampfartigen Muskelkontraktion, die der eines Wechselstroms ähnelt.

Die oben erwähnte vergleichsweise gleich große Gefahr von Gleich- und Wechselstrom gilt nur für Spannungen bis 500 V. Bei höheren Spannungen wird Gleichstrom gefährlicher als 50-Hz-Wechselstrom.

Es ist auch bekannt, dass die Verletzungsgefahr mit zunehmender Stromstärke durch eine Person steigt, so dass in Anlehnung an diese Erkenntnis eigentlich zu erwarten ist, dass eine Erhöhung auch der Frequenz zu einer Erhöhung dieser Gefahr führt.

Im Rahmen der vorliegenden Entwicklung durchgeführte Experimente haben jedoch gegenteilig zu dieser Annahme ergeben, dass diese Annahme nur im Frequenzbereich von 0 bis 50 Hz bzw. bzw. maximal 100 Hz zutrifft; eine weitere Erhöhung der Frequenz geht trotz der Zunahme des durch den Menschen fließenden Stroms mit einer Abnahme der Verletzungsgefahr einher, die bei einer Frequenz von grösser 10 kHz oder besser grösser 100 kHz und noch besser im Bereich von 450 - 500 kHz verschwindet, d. h., vorliegend wird angenommen dass Ströme mit solch hohen Frequenzen den Menschen nicht in relevanter Art und Weise beeinträchtigen. Eine Ursache dafür kann sein, dass die Frequenz der Spannung zu hoch ist, um eine effektive Ionisationswirkung im menschlichen Körper bewirken zu können.

In anderen Worten kann man davon ausgehen dass eine Wechselspannung mit einem Effektivwert von bis zu 250 Volt und einer Frequenz von mehr als 30 kHz, besser mehr als 100 kHz, selbst bei Berührung nicht zu Schmerzen führt oder gefährlich ist. Es sei darauf hingewiesen, dass die Ausgangsspannung und die Ausgangsfrequenz der Vorrichtung von der jeweiligen technischen Aufgabe bzw. der zu speisenden Last abhängen damit nicht auf einen einzelnen Wert beschränkbar sind.

Zusammengefasst werden gemäss der vorliegenden Offenbarung die folgenden technischen Mittel vorteilhaft genutzt:
- Resonanz zur Neutralisierung reaktiver Widerstände,
- Galvanische Isolierung zur Vermeidung eines elektrischen Schlags durch die Erde; und/oder
- Vermeidung eines elektrischen Schlags aufgrund der hochfrequenten Ausgangsspannung der Vorrichtung.

Damit wird die Sicherheit des Menschen verbessert und es werden elektrische Energieverluste reduziert.

Weitere Merkmale und Zweckmässigkeiten der vorliegenden Erfindung ergeben sich aus der Beschreibung eines Ausführungsbeispiels anhand der beigefügten Zeichnungen.
- Fig. 1: zeigt einen schematischen Aufbau der Vorrichtung 1 zur sicheren und effizienten Leistungsversorgung bzw. Stromversorgung,
- Fig. 2a und 2b: zeigen jeweils einen Teil eines beispielhaften Schaltplans zur Umsetzung des schematischen Aufbaus der Fig. 1, und
- Figuren 3a bis 3d: zeigen Ersatzschaltbilder mit der Vorrichtung 1 und angeschlossener Leitung und verschiedenen Lasten bzw. Verbrauchern.

### BESCHREIBUNG VON BEISPIELHAFTEN AUSFÜHRUNGSFORMEN

Im Folgenden werden verschiedene Ausführungsformen der vorliegenden Offenbarung unter Bezugnahme auf die beigefügten Zeichnungen lediglich beispielhaft offenbart. Ausführungsformen und darin verwendete Begriffe sollen jedoch nicht dazu dienen, die vorliegende Offenbarung auf bestimmte Ausführungsformen zu beschränken, und sie sollte so ausgelegt werden, dass sie verschiedene Änderungen, Äquivalente und/oder Alternativen gemäß den Ausführungsformen der vorliegenden Offenbarung beinhaltet.

Sollten in der Beschreibung allgemeinere Begriffe für in den Figuren dargestellte Merkmale oder Elemente verwendet werden, so ist beabsichtigt, dass für den Fachmann nicht nur das spezielle Merkmal oder Element in den Figuren offenbart ist, sondern auch die allgemeinere technische Lehre.

In Bezug auf die Beschreibung der Figuren können die gleichen Bezugszeichen in den einzelnen Figuren verwendet werden, um auf ähnliche oder technisch entsprechende Elemente zu verweisen. Weiter können der Übersichtlichkeit halber in einzelnen Detail- oder Ausschnittsansichten mehr Elemente oder Merkmale mit Bezugszeichen dargestellt sein, als in den Überblicksansichten. Dabei ist davon auszugehen, dass diese Elemente oder Merkmale auch entsprechend in den Überblicksdarstellungen offenbart sind, auch wenn diese dort nicht explizit aufgeführt sind.

Es ist zu verstehen, dass eine Singularform eines Substantivs, das einem Gegenstand entspricht, eines oder mehrere der Dinge beinhalten kann, es sei denn, der betreffende Kontext weist eindeutig auf etwas anderes hin.

In der vorliegenden Offenbarung kann ein Ausdruck wie "A oder B", "mindestens einer von "A oder/und B" oder "einer oder mehrere von A oder/und B" alle möglichen Kombinationen von zusammen aufgeführten Merkmalen beinhalten. Ausdrücke wie "erster", "zweiter", "primär" oder "sekundär", die hierin verwendet werden, können verschiedene Elemente unabhängig von ihrer Reihenfolge und/oder Bedeutung darstellen und schränken entsprechende Elemente nicht ein. Wenn beschrieben wird, dass ein Element (z. B. ein erstes Element) "funktionsfähig" oder "kommunikativ" mit einem anderen Element (z. B. einem zweiten Element) gekoppelt oder verbunden ist, kann das Element direkt mit dem anderen Element verbunden werden oder mit dem anderen Element über ein anderes Element (z. B. ein drittes Element) verbunden werden.

Ein in der vorliegenden Offenbarung verwendeter Ausdruck "konfiguriert zu" (oder "eingerichtet") kann beispielsweise durch "geeignet für", "geeignet zu", "angepasst zu", "gemacht zu", "fähig zu" oder "entworfen zu" ersetzt werden, je nach dem technisch Möglichen. Alternativ kann in einer bestimmten Situation ein Ausdruck "Vorrichtung konfiguriert zu" oder "eingerichtet zu" bedeuten, dass die Vorrichtung zusammen mit einer anderen Vorrichtung oder Komponente arbeiten kann, oder eine entsprechende Funktion ausführen kann.

Die Formulierung "kann" weist auf ein optionales Merkmal hin.

Anzumerken ist, dass die vorliegenden Einzelaspekte, beispielsweise das Grundelement, das Wandelement oder die Klappe der Hochwasserschutzvorrichtung hierin als Einzelteile oder Einzelvorrichtungen offenbart sind. Es ist dem Fachmann also klar, dass auch einzelne Aspekte oder Anlagenteile hierin auch für sich genommen offenbart sind. Es ist vorgesehen, dass diese einzelnen Aspekte auch gesondert beansprucht werden können. Insbesondere ist auch eine Klappe für eine Hochwasserschutzvorrichtung offenbart.

Weiter sind der Übersichtlichkeit halber in den Figuren nicht alle Merkmale und Elemente, insbesondere wenn sich diese wiederholen, einzeln bezeichnet. Es sind vielmehr die Elemente und Merkmale jeweils exemplarisch bezeichnet. Analoge oder gleiche Elemente sind dann als solche zu verstehen.

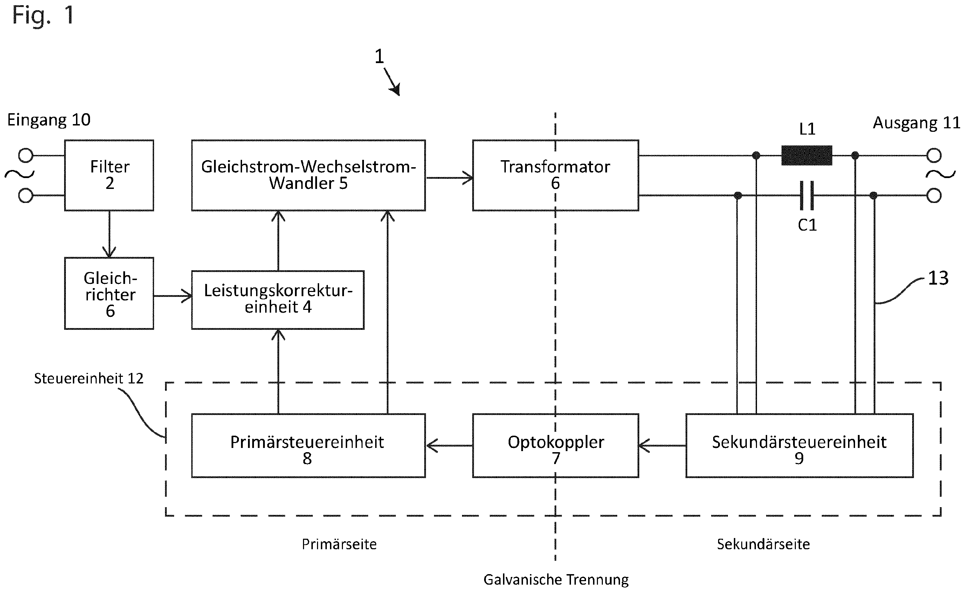

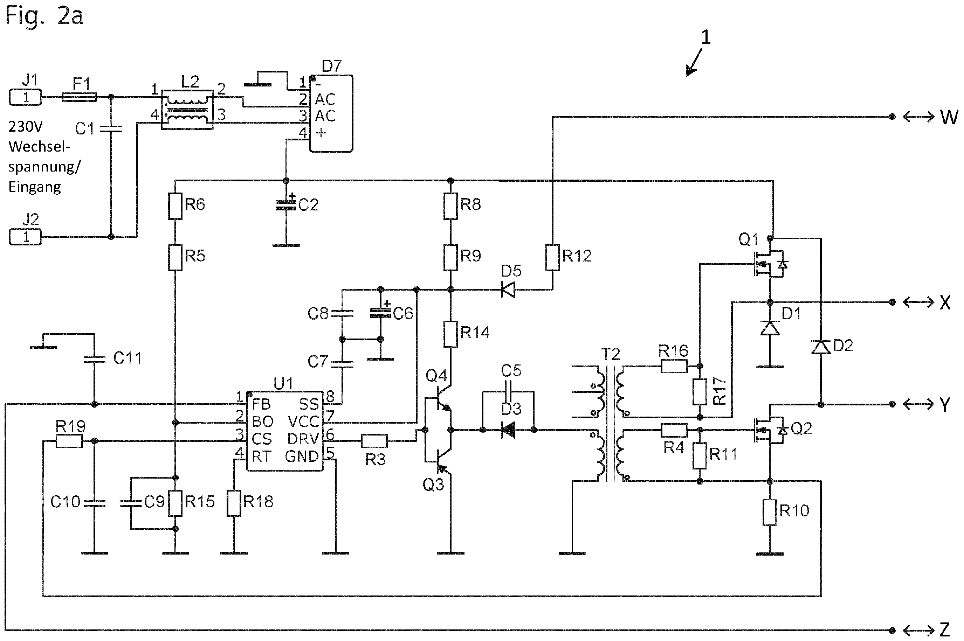

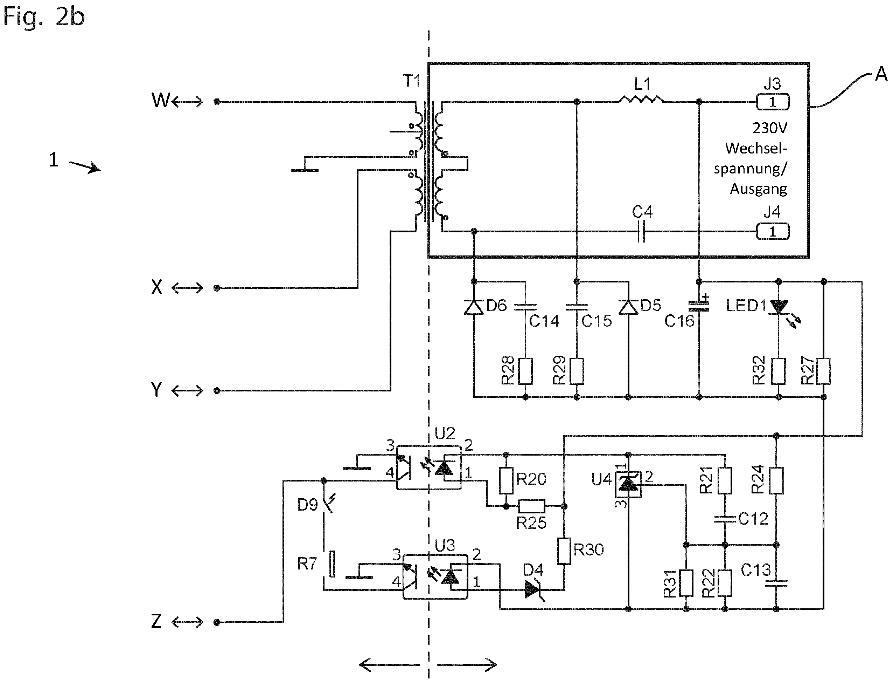

Die Figuren 1 und 2 zeigen eine beispielhafte Ausführungsform der vorliegenden Offenbarung. Die Fig. 1 zeig einen schematischen Aufbau der Vorrichtung 1 zur sicheren und effizienten Leistungsversorgung bzw. Stromversorgung. Die Figuren 2a und 2b zeigt einen Schaltplan, der eine beispielhafte Umsetzung der Vorrichtung 1 der Fig. 1 ist. Allerdings kann eine Umsetzung des Aufbaus der Vorrichtung 1 der Fig. 1 auch von dem in den Figuren 2a und 2b gezeigten Schaltplan abweichen. Die Werte der Bauteile der Figuren 2a und 2b kann der Fachmann entsprechend der Zielanwendung (beispielsweise aufgrund vorgegebener landesspezifischer Strom-und Spannungsbereiche) geeignet dimensionieren, so dass die exakten Werte der einzelnen Bauteile vorliegend weggelassen sind.

Die folgende Erläuterung der Fig. 1 erfolgt zunächst aus Sicht des Leistungsflusses.

Die Vorrichtung 1 der Fig. 1 weist einen Eingang 10 für eine Netz-Wechselspannung auf, welche beispielsweise die in Europa übliche 230V Spannung bei 50 Hz ist. Mit dem Filter 2 wird diese Netz-Wechselspannung gefiltert. Der Filter 2 kann beispielsweise ein Tiefpassfilter sein, um transiente Störspannungen der Netzwechselspannung zu filtern.

Dem Filter 2 nachgeschaltet ist ein Gleichrichter 3, beispielsweise ein Brückengleichrichter, der die Wechselspannung in eine gleichgerichtete Spannung umwandelt. Zur Verbesserung der Wirkung der Gleichrichtung kann zudem ein Glättungskondensator des Gleichrichters vorgesehen sein.

Dem Gleichrichter nachgeschaltet kann eine (optionale) Leistungskorrektureinheit 4 vorgesehen sein. Die Leistungskorrektureinheit erhöht den durch Verzerrungsblindleistung verminderten Leistungsfaktor, d. h. reduziert den Anteil an störenden Oberschwingungen, womit die die Netzbelastung verringert wird.

Der Leistungskorrektureinheit 4 nachgeschaltet ist ein Gleichstrom-zu-Wechselstrom Wandler 5, mit welchem die gleichgerichtete Wechselspannung wieder in eine Wechselspannung mit einer Frequenz bzw. mit einem Frequenzbereich umgewandelt wird. Die Spannung am Ausgang des Gleichstrom-zu-Wechselstrom Wandlers 5 kann auch als Wandler-Wechselspannung bezeichnet werden.

Mittels eines dem Gleichstrom-zu-Wechselstrom Wandler 5 nachgeschalteten Transformators 6 (bzw. eines induktiven Übertragers 6) erfolgt ein Leistungsübergang von der Primärseite der Vorrichtung 1 auf dessen Sekundärseite. Dieser Transformator 6 weist zumindest zwei Ausgänge auf.

Sekundärseitig am Transformator 6 ist an einem Ausgang des Transformators 6 eine Induktivität L1 bzw. eine Spule L1 vorgesehen. Weiterhin ist an einem anderen Ausgang des Transformators eine Kapazität C1 bzw. ein Kondensator C1 vorgesehen. Allerdings können die Induktivität L1 und die Kapazität C1 auch in oder an der Sekundärseite des Transformators 6 integriert vorgesehen sein oder Bestandteile des Transformators 6 darstellen.

Die Induktivität L1 ist wiederum mit einem (ersten) Pol des Ausgangs 11 verbunden, und die Kapazität C1 ist mit einem anderen (zweiten) Pol des Ausgangs 11 verbunden, welcher eine sichere Wechselspannung zur Verfügung stellt. Insofern werden betreffend der Induktivität L1 und der Kapazität C1 Signale zur Verfügung gestellt, die Aufschluss über die Charakteristika nicht nur der bereitgestellten Ausgangsspannung (und -stroms) erlaubt, sondern auch Aufschluss über die Charakteristika eines an den Ausgang 11 angeschlossenen Verbrauchers (nicht dargestellt) Der Verbraucher kann wiederum mittels einer Stromleitung mit dem Ausgang 11 verbunden sein. Der Ausgang 11 kann beispielsweise als Buchse zum Anschluss einer Stromleitung realisiert sein.

An beiden Seiten der Induktivität L1 und auch an beiden Seiten der Kapazität C1 sind Abgriffe 13 vorgesehen (in Fig. 1 ist beispielhaft nur ein Abgriff 13 gekennzeichnet). Alternativ können auch weniger Abgriffe 13 vorgesehen sein, beispielsweise nur 2 über der Induktivität L1, etc. Diese Abgriffe 13 dienen der Signalübertragung an eine Sekundärsteuereinheit 9, die die Signale aufbereitet bzw. verarbeitet. Die Sekundärsteuereinheit 9 kann dabei rein analog, als digitale Schaltung (mit A/D-Wandler, Prozessor, usw.) oder als Mischung aus beidem realisiert sein. Das Ergebnis der Signalverarbeitung und/oder - aufbereitung durch die Sekundärsteuereinheit 9 wird über einen Optokoppler 7 bzw. galvanisch getrennt an eine Primärsteuereinheit 8 übertragen, welche dieses Ergebnis weiter verarbeitet und/oder aufbereitet. Die Primärsteuereinheit 8 steuert damit wiederum den Gleichstrom-Wechselstrom-Wandler 5 und eventuell die Leistungskorrektureinheit 4. Die Primärsteuereinheit 8 und die Sekundärsteuereinheit 9 können gemeinsam als Steuereinheit 12 der Vorrichtung 1 bezeichnet werden.

Der in Fig. 1 gezeigte schematische Aufbau der Vorrichtung 1 kann als Resonanzübertragungssystem oder Resonanznetzteil bezeichnet werden, in welchem einen (LC-) Schwingkreis im Resonanzbetrieb zur Leistungsübertragung verwendet werden kann.

Der übertragende Teil dieses Resonanzübertragungssystem weist den Filter 2 (beispielsweise einen EMV-Filter), den Gleichrichter 3, die optionale Leistungskorrektureinheit 4 (in Englisch auch "PFC" bezeichnet), den Gleichstrom-Wechselstrom-Wandler 5, den Transformator 6, die Induktivität L1 und die Kapazität C1, die einen LC-Schwingkreis bilden, auf. Dieser LC-Schwingkreis kann auch mit Hilfe der Ausgangswicklung des Transformators gebildet werden.

Auf der Seite der Sekundärspule des Transformators 6 befindet sich die Sekundärsteuereinheit 9, die die Spannung und/oder den Strom am Ausgang der Vorrichtung 1 erfassen und/oder verarbeiten kann, wobei über die galvanische Optokopplung 7 die erfassten Parameter an die Primärsteuereinheit 8 weiterleitet, die das in die Primärwicklung des Transformators 6 eingespeiste Leistungssignal steuert.

Insbesondere kann die Steuereinheit 12 einen ausgangsseitigen Kurzschluss detektieren, die im Kurzschlussfall die Leistungsversorgung durch die Vorrichtung 1 unterbricht.

Eine Besonderheit dieser Anordnung ist beispielsweise (im Fall eines europäischen Anwendungsfalls), dass die Netz-Wechselspannung und die Ausgangsspannung 230 V ± 23 V betragen, während jedoch die Frequenz der Ausgangsspannung sich von der Frequenz der Netz-Wechselspannung deutlich unterscheidet. Vorzugsweise ist die Frequenz der Ausgangsspannung grösser als 100 kHz.

Nachstehend wird anhand der Figuren 2a und 2b eine beispielhafte Schaltung erläutert, die das vorstehend mit Bezug auf Fig. 1 erläuterte Konzept eines Resonanzübertragungssystems verdeutlicht. Die Figuren 2a und 2b zeigen einen einzelnen zusammengehörigen Schaltplan, wobei die Leitungsverbindungen zwischen den Schaltungsteilen der Fig. 2a und 2b durch entsprechende Verweise gekennzeichnet sind.

Die Netzspannung durchläuft eine (optionale) Schutzsicherung F1 und gelangt in den elektromagnetischen Störungsfilter (vgl. Filter 2 der Fig. 1), der aus dem Kondensator C1 und der Drossel L2 besteht. Dieser Filter ist vorteilhaft, um zu verhindern, dass hochfrequente Emissionen, die durch abruptes Umschalten von Transistoren entstehen, in das allgemeine Netz gelangen, und um zu verhindern, dass Störungen aus dem Netz den Betrieb der Vorrichtung 1 beeinträchtigen. Anschließend wird die Wechselspannung an die Diodenbrücke D7 weitergeleitet, gleichgerichtet und an den Glättungskondensator C2 weitergeleitet. Von diesem Kondensator aus wird die gesamte Schaltung mit Strom versorgt.

In Folge wird ein Frequenz-Controller U1, beispielsweise ein Strommodus-PWM-Controller verwendet, um eine Doppel-Transistor-Leistungswandlerschaltung vorzusehen.

Ein derartiger Strommodus-PWM-Controller (PWM: Pulsweitenmodulation) ist ein elektronisches Bauteil, das zur Steuerung und Regulierung von Stromquellen verwendet wird. Nachstehend sind der Vollständigkeit halber die wichtigsten Aspekte seiner Funktionsweise beispielhaft erläutert:
Bei einer PWM wird die Durchschnittsleistung eines elektrischen Signals üblicherweise durch Ändern der Pulsbreite oder der Dauer des Signals gesteuert. Das Tastverhältnis bestimmt die durchschnittliche Leistung des Signals. Ein höheres Tastverhältnis führt zu mehr Leistung, während ein niedrigeres Tastverhältnis weniger Leistung ergibt.

Zu der Funktionsweise des Strommodus-PWM-Controllers kann eine Stromerkennung gehören, bei der der Controller den Ausgangsstrom des Systems vorzugsweise kontinuierlich überwacht. Weiterhin kann ein Vergleich des gemessenen IstWerts mit dem Sollwert erfolgen. Der gemessene Strom wird mit einem Referenzwert verglichen. Dieser Wert kann fest oder variabel sein, abhängig von den Systemanforderungen. Zudem wird das PWM-Signal erzeugt. Basierend auf dem Unterschied zwischen dem gemessenen Ist-Wert und dem Soll-Wert erzeugt der Controller ein PWM-Signal mit einem entsprechenden Tastverhältnis. Wenn der Ist-Strom unter dem Sollwert liegt, erhöht sich das Tastverhältnis, um den Strom zu steigern. Umgekehrt wird das Tastverhältnis reduziert, wenn der Strom den Sollwert übersteigt. Mittels des Strommodus-PWM-Controllers ist eine präzise Steuerung des Ausgangsstroms, insbesondere in Systemen, die schnell auf Laständerungen reagieren müssen, möglich.

Insofern ist die Schaltfrequenz des erzeugten PWM-Signals (und damit die Frequenz des Ausgangssignals der Vorrichtung 1) voreinstellbar: Vorzugsweise ist die Schaltfrequenz grösser 10 kHz, noch mehr bevorzugt grösser 100 kHz und noch weiter bevorzugt grösser 300 kHz. Weiterhin kann die Schaltfrequenz des erzeugten PWM-Signals in einem Frequenzbereich von 10 kHz bis 500 kHz, noch mehr bevorzugt in einem Frequenzbereich von 100 kHz bis 500 kHz und noch weiter bevorzugt in einem Frequenzbereich von 300 kHz - 500 kHz, sowie noch mehr bevorzugt in einem Frequenzbereich von 450 kHz - 500 kHz liegen. Diese Frequenzbereiche werden umso sicherer, je höher und enger diese definiert sind. Bei Frequenzen oberhalb 500 kHz hat sich gezeigt, dass die Verluste aufgrund der Dämpfung des Frequenzgangs einer üblichen Leitung ansteigen. Allerdings sind auch Frequenzen im Bereich von beispielsweise 500 kHz bis 1 Mhz denkbar.

Weiterhin kann der Controller U1 eine Frequenzjitterung (beispielsweise auf 15% der Schaltfrequenz) durchführen, um die Störfestigkeit zu verbessern und elektromagnetische Interferenzen zu reduzieren.

Zudem kann der Controller U1 eine Verriegelung des primären Überstromschutzes ermöglichen, um einen Schutz vor primären Überstrombedingungen mit einer festen Verzögerung, beispielsweise 10 ms, erlauben.

Der Controller U1 der Fig. 2 wird über einen Spannungsteiler versorgt. Der Widerstand der Teilerwiderstände R8 und R9 ist sehr hoch, um den Ladestrom der Kondensatoren C6 und C8 zu verringern. Der Controller U1 startet vorzugsweise nicht sofort, sondern erst später, beispielsweise etwa eine Sekunde nach dem Einschalten der Spannungsversorgung. Dies ist die Zeit, die zum Aufladen der Kondensatoren C6 und C8 benötigt wird. Dies geschieht, um die gesamte Schaltung vor einem falschen Betriebsmodus zu schützen. Denn die in den Kondensatoren gespeicherte Energie reicht nur für einen kurzen Impuls. Wenn nun alle Schaltungselemente der Vorrichtung 1 korrekt funktionieren, die Erzeugung des PWM-Signals beginnt und der Ausgangstransformator T1 anläuft, dann beginnt die Stromversorgung des Controllers U1 über einen anderen Weg. Von der zusätzlichen Niederspannungswicklung des Transformators T1 wird über den Widerstand R12 und die Gleichrichterdiode D5 eine Spannung an die Versorgungskondensatoren C6 und C8 geleitet, die den Dauerbetrieb des Controller U1 und auch der gesamten Vorrichtung 1 gewährleistet.

Sobald eine Störung in der Schaltung der Vorrichtung 1 auftritt, beispielsweise ein Schaltungselement ausfällt, das ein Wechselstromsignal an der Primärwicklung des Transformators T1 erzeugt, wird die Stromversorgung Controllers U1 unterbrochen und die gesamte Schaltung stellt folglich ihre Arbeit ein. Dadurch wird ein zusätzlicher Schutz der Schaltungselemente der Vorrichtung 1 erreicht.

Der Controller U1 kann zusätzlich dem vorstehend Erläuterten einen weiteren Schutz der Schaltung gegen einen Kurzschluss am Ausgang 11 des der Vorrichtung 1 implementieren. Um die (vorzugsweise leistungsstarken) Transistoren Q1 und Q2 vor Überstrom zu schützen, befindet sich in ihrem Schaltkreis eine niedrige Impedanz R10. Der Controller U1 kann den Spannungsabfall über R10 überwachen und den Strom berechnen, der durch diese Transistoren und die Primärwicklung des Transformators fließt. Sobald der Strom voreingestellte (Sicherheits-) Parameter überschreitet, stoppt der Controller U1 die Signalerzeugung und verhindert so den Ausfall der Leistungselemente auf der Primär- und Sekundärseite des Transformators T1 (vgl. Transformator 6 in Fig. 1).

Ein weiterer Schutz, der mittels des Controller U1 implementiert werden kann, ist der Schutz vor Unterspannung der Eingangsstromversorgung. Auf Bein 2 (BO-Eingang) des Mikrocontrollers U1 wird ein Signal vom Spannungsteiler eingespeist, der auf den Widerständen R6, R5, R15 implementiert ist. Fällt die Spannung an diesem Pin der Mikroschaltung unter einen bestimmten Schwellenwert, wird die Signalerzeugung gestoppt.

Die Erzeugungsfrequenz des PWM-Signals wird mit dem Widerstand R18 eingestellt.

Mittels des PWM-Signals können im Endergebnis sekundärseitig Ausgangsspannungen mit einer Frequenz von 10 Hz bis 500 kHz bzw. in den oben genannten Bereichen erzeugt werden.

Das Hochfrequenzsignal aus dem Anschluss 5 des Controllers U1 wird über den Strombegrenzungswiderstand R3 zu den Basen der Transistoren Q3 und Q4 geleitet. Mit diesen ist ein Leistungsverstärker aufgebaut, da Belastungsfähigkeit des Controllers U1 alleine nicht ausreichen kann, um die Transistoren Q1 und Q2 anzusteuern.

Über die Parallelschaltung des Kondensators C5 und der Diode D3 wird das Signal an den Trenntransformator T2 weitergeleitet. Dieser trennt den Hochspannungsstromkreis weiter von der Stromversorgung des Controllers U1.

Die beiden Sekundärwicklungen des Transformators T2 steuern direkt die Basen der (Hochleistungs-) Transistoren Q1 und Q2. Beim gleichzeitigen Öffnen dieser Transistoren fließt Strom durch die Primärwicklung des Transformators T1 der Endstufe. Der Strom der Primärwicklung erzeugt ein Magnetfeld im Inneren des Transformatorkerns. Dieses Magnetfeld versetzt dann die Ladungen im Inneren des Leiters der Sekundärwicklung in Bewegung. In ihnen wird ein Strom mit der gleichen Frequenz induziert. Auf diese Weise wird in einem Transformator Energie von der Primärwicklung auf die Sekundärwicklung übertragen, ohne dass die beiden Wicklungen miteinander in Kontakt kommen. Die Energieübertragung erfolgt durch ein Magnetfeld. Dies wird als galvanische Isolierung bezeichnet. Das heißt, es gibt keinen direkten Kontakt zwischen den beiden Wicklungen.

Eine Induktivität L1 und ein Kondensator C4 (vgl. Kapazität C1 der Fig. 1) befinden sich in Reihe mit der Sekundärwicklung des Transformators.

Sie sind vorliegend vorgesehen, um die grundlegenden Bedingungen einer Serienresonanz im Schwingkreis zu schaffen. Zu diesem Resonanzkreis gehören auch die Induktivität und die Kapazität der angeschlossenen Last, die in den Figuren 1 und 2 nicht dargestellt sind. Sie werden weiter unten im Detail besprochen. Bei unterschiedlichen Lasten können die Werte von L1 und C4 (bzw. C1) variieren, und in manchen Fällen sind diese Elemente überhaupt nicht vorhanden. Dies hängt von der Frequenz ab, bei der die Leistung übertragen wird, und von der Art der Last, ob kapazitiv oder induktiv.

Auf der Sekundärseite des Transformators T1 befindet sich außerdem ein Regler U4, der die Ausgangsspannung überwacht und diese Information an den Regler U1 weitergibt (vgl. Primär- und Sekundärsteuereinheiten 8,9 der Fig. 1).

Die Spannung von der Sekundärseite des Transformators T1 lädt über die Hochfrequenzdioden D5 und D6 den Kondensator C16 auf. Parallel zu jeder Diode befindet sich eine (optionale) Schutzschaltung gegen große Spannungsspitzen, die über die Kondensatoren C14, C15 und die Widerstände R28, R29 realisiert wird. Dieser Schutz ist in herkömmlichen, nicht resonanten Stromversorgungen eingebaut und wirkt im Moment des Transistorschaltens. Vorliegend kann ein solcher Schutz aber zumindest weitgehend entfallen, da in der Resonanzbetriebsart alle Emissionen durch die Resonanz selbst geglättet werden und folglich die Impulsbelastung des Kerns, der Drähte, Dioden und Tasten reduziert werden.

Vom Kondensator C16 wird die Spannung durch die Teiler R24, R22, R31 geleitet, um sie mit der Referenzspannung des Reglers U4 zu vergleichen. Wird die Schwelle von 2,4 Volt überschritten, sendet der Regler U4 ein Signal an die optische Isolations-LED U2 und von dort an den Regler U1, was zu einer Verringerung der Impulsbreite des Sollwertgebers des Reglers U1 führt. Je geringer die Impulsbreite des PWM-Signals (entspricht üblicherweise der Zeitdauer der Energieversorgung), desto geringer ist die Spannung am Ausgang des Transformators T1 und damit der gesamten Vorrichtung 1. Auf diese Weise können die Spannung geregelt und die voreingestellten Sollwertparameter eingehalten werden.

Die vorstehende Schaltungsanordnungen weist somit eine galvanische Trennung auf, wobei die Trennung mittels zumindest eines (opto-) elektronischen Bauelements (beispielsweise ein Dioden- oder Transistor-Optokoppler) realisiert wird.

Weiter ist eine Frequenzwandeleinrichtung, vorzugsweise mittels eines PWM-Controllers, vorgesehen, um die gewünschten Schaltfrequenzen und damit hohe Ausgangsfrequenzen der Wechselspannung am Ausgang 11 vorzusehen.

Die Frequenzwandeleinrichtung kann als Oberbegriff derjenigen Schaltungsteile betrachtet werden, die eine Änderung der Eingangsfrequenz in die gewünschte Ausgangsfrequenz ermöglicht.

Zudem ist ein (Hochfrequenz-) Transformator, der die galvanische Trennung gewährleistet, vorgesehen.

Das Signal vom Ausgang des Hochfrequenztransformators wird sowohl zum Vergleich der Referenzspannung, zur Reduzierung der Impulswiederholung als auch zur Umsetzung der Ausgangsspannungsstabilisierung verwendet

Vorzugsweise werden niedrige Spannungs- und (Hochfrequenz-) Ausgangswerte am Ausgang der Vorrichtung 1 bereitgestellt, um Strom-, Spannungs- oder Energiespitzen zu vermeiden.

Weiterhin wird die Frequenz (Frequenzkorrektur) bzw. die Phase (Phasenkorrektur) in Abhängigkeit von der Resonanz angepasst. Letzteres wird nachstehend nochmals näher erläutert.

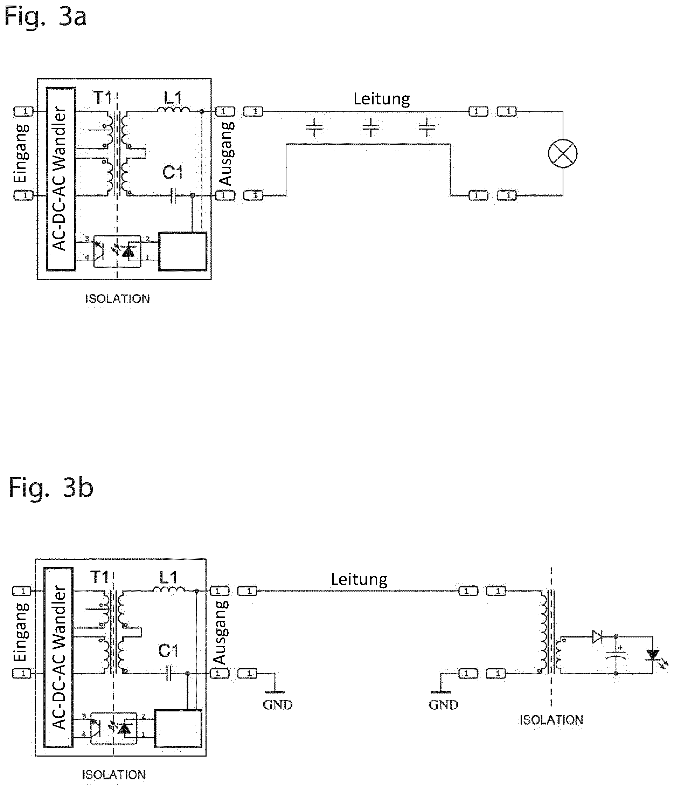

Die Figuren 3a bis 3d zeigen Ersatzschaltbilder mit der Vorrichtung 1 und angeschlossener Leitung und verschiedenen Lasten bzw. Verbrauchern.

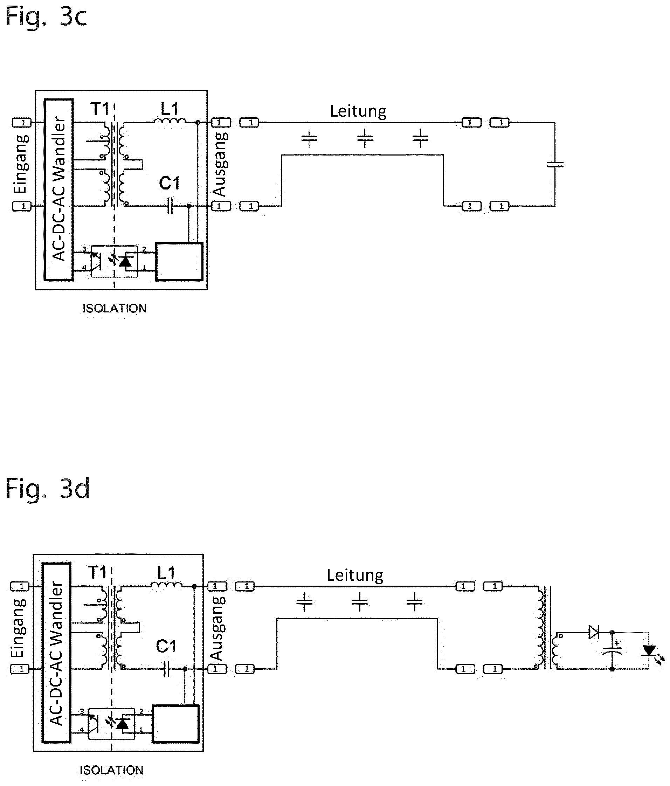

Es gibt grundsätzlich drei Arten von Lasten: aktive, induktive und kapazitive. Die Fig. 3a zeigt eine aktive Last (eine Glühbirne, eine Heizung oder einen gewöhnlichen Widerstand). Die Leitung kann dabei eine parasitäre Kapazität aufweisen, welche in Fig. 3a mittels der drei Kondensatorzeichen angedeutet ist. Auch kann die Leitung eine parasitäre Induktivität aufweisen. Die Fig. 3b zeigt, dass die (hochfrequente) Ausgangsspannung der Vorrichtung 1 lastseitig wieder in der Frequenz verringert werden kann. Die Fig. 3c zeigt, dass es möglich ist, auf eine Ader der Übertragungsleitung zu verzichten, und den Transformator auf der Verbraucherseite galvanisch zu isolieren. Dieser Aufbau eignet sich besonders für große Entfernungen. Fig. 3d zeigt den Anschluss einer kapazitiven Last bzw. eines kapazitiven Verbrauchers.

### (Weitere Aspekte)

Die hierin offenbarte Leistungsversorgungsvorrichtung kann auch als Energieversorgungswandlungsvorrichtung, als Sicherheitsnetzteil oder als entkoppelte Stromversorgung bezeichnet werden.

Eine Netz-Wechselspannung im Sinne dieser Anmeldung kann eine übliche Niederspannungsnetzspannung sein, welche in einem Land zur Energieversorgung von Haushalten verwendet wird.

Eine Netz-Wechselspannung im Sinne dieser Anmeldung kann irgendeine Wechselspannung eines Energieversorgers oder einer Sonderstromversorgung (beispielsweise bei einer Werksversorgung) sein. Beispielsweise kann die Netz-Wechselspannung mit einer in Europa üblichen Netzspannung 230 V ± 23 V bei einer Netzfrequenz von 50 Hz ± 0,2 Hz, einer in Nord- und Südamerika üblichen Netzspannung von 240V bei 60 Hz oder von 110V bei 60 Hz oder einer in Asien üblichen Netzspannung von 100V bei 50 Hz oder 60 Hz sein.

Der Eingangsspannungsbereich der Vorrichtung 1 der vorliegenden Offenbarung kann auch ein Weitbereichs-Eingang sein, der beispielsweise mit Spannungen im Bereich von 60V bis 300V und/oder Frequenzen von 40 Hz bis 70 Hz arbeiten kann.

Die Vorrichtung 1 der vorliegenden Offenbarung kann derart ausgestaltet sein, dass damit ein Auslösen eines üblichen Fehlerstromschutzschalters, beispielsweise ein 30 mA RCD, sogar für den Fall vermieden wird, in dem der Ausgang der Vorrichtung 1 in sich oder gegen Erde kurzgeschlossen ist.

Obschon die vorliegende Vorrichtung 1 in Bezug auf eine zweipolige Ausführung beschreiben ist (Eingang/Ausgang) kann das Prinzip dieser Offenbarung auch auf drei- oder mehrpolige Ausführungen Anwendung finden. Beispielsweise kann die Vorrichtung 1 auch als Drehstromnetzteil zum Einsatz kommen.

Vorliegend wird ein Schwingkreis derart betrieben, dass dieser resonant schwingt. Dieser Schwingkreis umfasst die Sekundärwicklung des Transformators T1, die Übertragungsleitung, eventuell die Primärwicklung des Transformators T2 sowie die zusätzliche Kapazität C1 und Induktivität L1. Ist die Frequenz nicht festgelegt, kann sie zum Erreichen der Resonanz entweder durch Regelung der Schaltfrequenz oder aber durch Anpassung der Werte der Kapazität C1 und Induktivität L1 angepasst werden.

Die Kapazität C1 und die Induktivität L1 können bereits in den Elementen des Schwingkreises vorhanden sein, beispielsweise können diese mittels einer Windungszwischenkapazität und Induktivität der Transformatorwicklungen vorgesehen sein.

## Patentansprüche

1. Leistungsversorgungsvorrichtung (1), aufweisend:
einen Eingang (10) für eine Netz-Wechselspannung mit einer Eingangsfrequenz auf einer Primärseite der Leistungsversorgungsvorrichtung (1);
einen Gleichrichter (3) zum Gleichrichten der Netz-Wechselspannung, die in den Eingang (10) eingespeist wird;
einen Gleichstrom-zu-Wechselstrom Wandler (5), der die gleichgerichtete Wechselspannung in eine Wandler-Wechselspannung mit einer Wandlerfrequenz wandelt;
einen Ausgangstransformator (6, T1) mit zumindest zwei Ausgängen, der die primärseitige Wandler-Wechselspannung des Gleichstrom-zu-Wechselstrom Wandlers (5) galvanisch getrennt in eine sekundärseitige Ausgangsspannung mit der Wandlerfrequenz wandelt;
einen dem Ausgangstransformator (6, T1) nachgeschalteter und zumindest zweipoliger Ausgang (11) auf der Sekundärseite der Leistungsversorgungsvorrichtung (1) zur Versorgung zumindest einer Last (20);
wobei die Wandlerfrequenz grösser als die Eingangsfrequenz ist.

2. Leistungsversorgungsvorrichtung (1) nach Anspruch 1, wobei die Leistungsversorgungsvorrichtung (1) derart eingerichtet ist, dass die Wandlerfrequenz der Ausgangsspannung im Bereich von 100-500 kHz, vorzugsweise im Bereich von 300-500 kHz, und noch mehr bevorzugt im Bereich von 450-450 kHz liegt.

3. Leistungsversorgungsvorrichtung (1) nach Anspruch 1 oder 2, weiter aufweisend:
eine mit einem ersten Ausgang des Ausgangstransformators (6, T1) in Serie geschaltete Induktivität (L1); wobei die Induktivität (L1) mit einem ersten Pol des Ausgangs (11) verbunden ist;
eine mit einem zweiten Ausgang des Ausgangstransformators (6, T1) in Serie geschaltete Kapazität (C1); wobei die Kapazität (C1) mit einem zweiten Pol des Ausgangs (11) verbunden ist.

4. Leistungsversorgungsvorrichtung (1) nach Anspruch 3, wobei die Leistungsversorgungsvorrichtung (1) derart eingerichtet ist, dass ein Schwingkreis, der die Kapazität (C1), die Induktivität (L1), eine Sekundärwicklung des Transformators (6, T1) und die Last (20) aufweist, derart betrieben wird, dass die Blindleistung gegenüber dem Betrieb der Last (20) mit der Netz-Wechselspannung durch Frequenzanpassung verringert wird.

5. Leistungsversorgungsvorrichtung (1) nach einem der vorhergehenden Ansprüche, weiter aufweisend:
eine Sekundärsteuereinheit (9), welche auf der Sekundärseite angeordnet ist und welche die Spannung und/oder den Strom am Ausgang (11) der Vorrichtung (1) erfassen kann und/oder verarbeiten kann;
einen Optokoppler (7), der die erfassten und/oder verarbeiteten Parameter an eine primärseitige Primärsteuereinheit (8) weiterleitet, welche ein in eine Primärwicklung des Ausgangstransformators (6) eingespeistes Leistungssignal steuert.

6. Leistungsversorgungsvorrichtung (1) nach einem der vorausgehenden Ansprüche, wobei
die Wandler-Wechselspannung mit deren Wandlerfrequenz durch einen Strommodus-PWM-Controller geregelt wird; und/oder
die Netz-Wechselspannung und die Ausgangsspannung 230 V ± 23 V betragen.

7. Leistungsversorgungsvorrichtung (1) nach einem der vorausgehenden Ansprüche, wobei
die Leistungsversorgungsvorrichtung (1) eingerichtet ist, die Wandlerfrequenz derart zu steuern, dass der Blindwiderstand der Kapazität eines lastseitigen Schwingkreises zumindest annähernd gleich dem Blindwiderstand der Induktivität desselben ist.

8. Leistungsversorgungsvorrichtung (1) nach einem der vorausgehenden Ansprüche, weiter aufweisend eine Leistungskorrektureinheit (4) zwischen Gleichrichter (3) und Gleichstrom-zu-Wechselstrom Wandler (5).

9. Verfahren zur Verbesserung der Sicherheit einer Leistungsversorgung einer Last (20) mittels einer Leistungsversorgungsvorrichtung (1), aufweisend die folgenden Schritte:
Gleichrichten einer Netz-Wechselspannung, die eine Eingangsfrequenz aufweist;
Wandeln der gleichgerichteten Wechselspannung in eine Wandler-Wechselspannung mit einer Wandlerfrequenz mittels eines Gleichstrom-zu-Wechselstrom Wandlers (5);
Wandeln der Wandler-Wechselspannung unter galvanischer Trennung in eine Ausgangsspannung mit der Wandlerfrequenz.

10. Verfahren gemäss Anspruch 9, wobei die Wandlerfrequenz grösser als die Eingangsfrequenz ist.

11. Verfahren gemäss Anspruch 9 oder 10, wobei die Wandlerfrequenz der Ausgangsspannung im Bereich von 100-500 kHz, vorzugsweise im Bereich von 300-500 kHz, und noch mehr bevorzugt im Bereich von 450-450 kHz liegt.

12. Verfahren gemäss einem der Ansprüche 9 bis 11, wobei die die Wandlerfrequenz derart gesteuert wird, dass der Blindwiderstand der Kapazität eines lastseitigen Schwingkreises zumindest annähernd gleich dem Blindwiderstand der Induktivität desselben ist.

13. Verfahren gemäss einem der Ansprüche 9 bis 12, wobei die Leistungsversorgungsvorrichtung (1) das folgende aufweist:
eine mit einem ersten Ausgang eines Ausgangstransformators (6, T1) in Serie geschaltete Induktivität (L1); wobei die Induktivität (L1) mit einem ersten Pol des Ausgangs (11) verbunden ist;
eine mit einem zweiten Ausgang des Ausgangstransformators (6, T1) in Serie geschaltete Kapazität (C1); wobei die Kapazität (C1) mit einem zweiten Pol des Ausgangs (11) verbunden ist;
das Verfahren weiter aufweisend die folgenden Schritte:
Betreiben eines Schwingkreises der Leistungsversorgungsvorrichtung (1), der zumindest die Kapazität (C1), die Induktivität (L1), eine Sekundärwicklung des Transformators (6, T1) und die Last (20) aufweist, derart, dass die Blindleistung gegenüber dem Betrieb der Last (20) mit der Netz-Wechselspannung durch Frequenzanpassung verringert wird.

14. Verwendung der Leistungsversorgungsvorrichtung (1) nach einem der Ansprüche 1 bis 8 zum Schutz vor Stromschlägen bei ausgangsseitig angeschlossenen Lasten und Leitungen.

15. Verwendung der Leistungsversorgungsvorrichtung (1) nach einem der Ansprüche 1 bis 8 zur Neutralisierung reaktiver Widerstände ausgangsseitig angeschlossener Lasten (20) und/oder Leitungen durch Frequenzanpassung.
